# EUROPÄISCHE PATENTSCHRIFT

(11) **EP 4 058 691 B1**
(45) Veröffentlichungstag und Bekanntmachung des Hinweises auf die Patenterteilung: **21.05.2025**
(21) Anmeldenummer: 20733739.5
(22) Anmeldetag: 17.06.2020
(51) Int. Cl.: F16H 61/00, F16H 61/688

(54) **VERFAHREN ZUM BETREIBEN EINES DOPPELKUPPLUNGSGETRIEBES EINES KRAFTFAHRZEUGS SOWIE KRAFTFAHRZEUG**
METHOD FOR OPERATING A DUAL CLUTCH TRANSMISSION OF A MOTOR VEHICLE AND MOTOR VEHICLE
PROCÉDÉ DE FONCTIONNEMENT D'UNE TRANSMISSION À DOUBLE EMBRAYAGE D'UN VÉHICULE À MOTEUR, ET VÉHICULE À MOTEUR

(30) Priorität: 12.11.2019 DE 102019130482
(43) Veröffentlichungstag der Anmeldung: 21.09.2022
(73) Patentinhaber: Audi AG, 85045 Ingolstadt (DE)
(72) Erfinder: SZEPPAT, Enrico, 09328 Lunzenau OT Göritzhain (DE); GUNDLACH, Lutz, 85049 Ingolstadt (DE)
(74) Vertreter: Bierschneider, Walter
(86) Internationale Anmeldenummer: PCT/EP2020/066697
(87) Internationale Veröffentlichungsnummer: WO 2021/094003

(56) Entgegenhaltungen:
- EP-A1- 3 287 669
- DE-A1- 19 950 696

## Beschreibung

Die Erfindung betrifft ein Verfahren zum Betreiben eines Doppelkupplungsgetriebes eines Kraftfahrzeugs gemäß dem Oberbegriff von Patentanspruch 1. Des Weiteren betrifft die Erfindung ein Kraftfahrzeug.

Die DE 10 2016 221 794 A1 offenbart ein Kraftfahrzeuggetriebe, mit einer Parksperreneinrichtung aufweisend eine Getriebeausgangswelle, ein Getriebegehäuse und einen Getrieberadsatz, welcher drehmomentleitend mit der Getriebeausgangswelle verbindbar ist oder mit dieser verbunden ist.

Der DE 10 2007 019 241 A1 ist ein Verfahren zur Steuerung eines automatisierten Doppelkupplungsgetriebes als bekannt zu entnehmen. Außerdem ist aus der DE 199 50 696 A1 ein Doppelkupplungsgetriebe für ein Kraftfahrzeug bekannt, mit einer einen Anfahrgang aufweisenden und mit einer ersten Kupplung verbundenen ersten Getriebeeingangswelle, mit einer einen Fahrgang aufweisenden und mit einer zweiten Kupplung verbundenen zweiten Getriebeeingangswelle und mit einer gemeinsamen Getriebeabtriebswelle.

Außerdem offenbart die DE 10 2011 108 013 A1 ein getriebeverspannendes Verfahren zum Prüfen eines mindestens zwei Teilgetriebe aufweisenden Getriebes.

Des Weiteren ist der EP 3 287 669 A1 ein Verfahren zum Ansteuern eines automatisierten Antriebsstranges eines Kraftfahrzeuges, um das Kraftfahrzeug zu immobilisieren, als bekannt zu entnehmen, wobei der Antriebsstrang eine Getriebeanordnung mit einer Mehrzahl von Gangstufen aufweist, die zumindest teilweise unabhängig voneinander schaltbar sind. Zur Immobilisierung wird eine Gangstufenpaarung geschaltet, die eine erste Paarungsgangstufe und eine zweite Paarungsgangstufe aufweist, um den Antriebsstrang zu blockieren, wobei zur Immobilisierung eine Mehrzahl von Gangstufenpaarungen zur Verfügung steht, die in einer Prioritätsliste abgespeichert sind. Das Verfahren umfasst die Schritte, von einer zu verwendeten Gangstufenpaarung zunächst zu versuchen, die erste Paarungsgangstufe zu schalten, und in Abhängigkeit davon, ob dieser Versuch erfolgreich war, entweder zu versuchen, die zweite Paarungsgangstufe zu schalten, oder zu versuchen, eine erste Paarungsgangstufe einer in der Prioritätsliste folgenden Gangstufenpaarung zu schalten.

Zudem offenbart die DE 199 50 696 A1 ein Doppelkupplungsgetriebe, insbesondere für ein Kraftfahrzeug, mit einer einen Anfahrgang aufweisenden und mit einer ersten Kupplung verbundenen ersten Getriebeeingangswelle, mit einer einen Fahrgang aufweisenden und mit einer zweiten Kupplung verbundenen zweiten Getriebeeingangswelle und mit einer gemeinsamen Getriebeabtriebswelle. Mindestens einer der Getriebeeingangswellen sind mehrere Gänge zugeordnet und in einer Parksperrenfunktion sind zwei einer der Getriebeeingangswellen zugeordnete Gänge gleichzeitig schaltbar sind.

Aufgabe der vorliegenden Erfindung ist es, ein Verfahren zum Betreiben eines Doppelkupplungsgetriebes sowie ein Kraftfahrzeug mit einem solchen Doppelkupplungsgetriebe zu schaffen, sodass eine Parksperre des Doppelkupplungsgetriebes auf besonders vorteilhafte Weise realisiert werden kann.

Diese Aufgabe wird erfindungsgemäß durch ein Verfahren mit den Merkmalen des Patentanspruchs 1 sowie durch ein Kraftfahrzeug mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Doppelkupplungsgetriebes eines vorzugsweise als Kraftwagen, insbesondere als Personenkraftwagen, ausgebildeten Kraftfahrzeugs. Beispielsweise ist wenigstens ein Rad des Kraftfahrzeugs über das Doppelkupplungsgetriebe antreibbar. Insbesondere können wenigstens oder genau zwei Räder des Kraftfahrzeugs über das Doppelkupplungsgetriebe angetrieben werden, wodurch beispielsweise das Kraftfahrzeug insgesamt angetrieben werden kann. Dies bedeutet, dass das Kraftfahrzeug in seinem vollständig hergestellten Zustand das Doppelkupplungsgetriebe und das auch als Fahrzeugrad bezeichnete Rad beziehungsweise die auch als Fahrzeugräder bezeichneten Räder aufweist. Das jeweilige Rad ist beispielsweise ein Bodenkontaktelement, über welches das Kraftfahrzeug in Fahrzeughochrichtung nach unten hin an einem Boden abgestützt oder abstützbar ist. Wird das Kraftfahrzeug entlang des Bodens gefahren, während das Kraftfahrzeug in Fahrzeughochrichtung nach unten hin an dem Boden abgestützt ist, so rollt das Rad an dem Boden ab.

Das Doppelkupplungsgetriebe weist ein erstes Teilgetriebe und ein zweites Teilgetriebe auf. Das Doppelkupplungsgetriebe weist außerdem eine dem ersten Teilgetriebe zugeordnete erste Kupplung und eine dem zweiten Teilgetriebe zugeordnete zweite Kupplung auf. Beispielsweise weist das Kraftfahrzeug einen Antriebsmotor auf, von welchem das Kraftfahrzeug über das Doppelkupplungsgetriebe angetrieben werden kann. Dabei umfasst der Antriebsmotor eine beispielsweise als Kurbelwelle ausgebildete Abtriebswelle. Unter dem Merkmal, dass die erste Kupplung dem ersten Teilgetriebe zugeordnet ist, kann insbesondere verstanden werden, dass das erste Teilgetriebe, insbesondere eine erste Getriebeeingangswelle des ersten Teilgetriebes, über die erste Kupplung beziehungsweise mittels der ersten Kupplung drehmomentübertragend mit der Abtriebswelle gekoppelt werden kann, insbesondere während die zweite Kupplung geöffnet ist. Unter dem Merkmal, dass die zweite Kupplung dem zweiten Teilgetriebe zugeordnet ist, kann insbesondere verstanden werden, dass das zweite Teilgetriebe, insbesondere eine zweite Getriebeeingangswelle des zweiten Teilgetriebes, über die zweite Kupplung beziehungsweise mittels der zweiten Kupplung drehmomentübertragend mit der Abtriebswelle gekoppelt werden kann, insbesondere während die erste Kupplung geöffnet ist. Somit kann beispielsweise das Kraftfahrzeug über das Doppelkupplungsgetriebe und insbesondere über das erste Teilgetriebe von dem Antriebsmotor angetrieben werden, während ein von dem Antriebsmotor bewirktes Antreiben des Kraftfahrzeugs durch das zweite Teilgetriebe unterbleibt. Ferner kann das Kraftfahrzeug über das Doppelkupplungsgetriebe und dabei über das zweite Teilgetriebe von dem Antriebsmotor angetrieben werden, während ein durch den Antriebsmotor bewirktes Antreiben des Kraftfahrzeugs über das erste Teilgetriebe unterbleibt. Die jeweilige Kupplung ist vorzugsweise als eine Reibkupplung, insbesondere als eine Lamellenkupplung, ausgebildet, wodurch ein besonders hoher Komfort, insbesondere Fahrkomfort, des Kraftfahrzeugs realisiert werden kann. Bei dem Verfahren wird das Doppelkupplungsgetriebe in einen Parksperrenzustand geschaltet, welcher im Folgenden noch genauer erläutert wird.

Durch den beziehungsweise in dem Parksperrenzustand ist eine, insbesondere mechanische, Parksperre des Doppelkupplungsgetriebes realisiert beziehungsweise aktiviert oder eingelegt. Durch die Parksperre ist das Doppelkupplungsgetriebe verspannt, insbesondere derart, dass die zuvor genannten Räder gegen eine jeweilige Drehung gesichert sind. Insbesondere ist durch die eingelegte beziehungsweise aktivierte Parksperre das Kraftfahrzeug gegen ein unerwünschtes Wegrollen gesichert oder zu sichern, insbesondere dann, wenn das Kraftfahrzeug beispielsweise an einem Hang beziehungsweise an einem Gefälle abgestellt beziehungsweise geparkt ist.

Um nun die Parksperre besonders vorteilhaft realisieren und insbesondere besonders sicher einlegen zu können, ist es erfindungsgemäß vorgesehen, dass das Doppelkupplungsgetriebe in dem Parksperrenzustand durch die folgenden Schritte, das heißt mittels der folgenden Schritte, geschaltet wird. Bei einem ersten der Schritte wird, während ein erster Gang eines der Teilgetriebe eingelegt ist, ein zum Einlegen eines zweiten Gangs des einen Teilgetriebes vorgesehener erster Einlegevorgang durchgeführt. Bei dem Einlegevorgang wird beispielsweise wenigstens ein Aktor angesteuert und dadurch betrieben, insbesondere mit dem grundsätzlichen Ziel, beispielsweise ein auch als Gangsteller bezeichnetes und dem zweiten Gang zugeordnetes Schaltelement zu bewegen.

Bei einem zweiten der Schritte wird ermittelt, dass trotz des Durchführens des Einlegevorgangs das Einlegen des zweiten Gangs unterbleibt beziehungsweise unterblieben ist. Mit anderen Worten wird bei dem zweiten Schritt ermittelt, dass trotz des Durchführens des Einlegevorgangs der zweite Gang nicht eingelegt wurde beziehungsweise das grundsätzlich gewünschte Einlegen des zweiten Gangs verhindert wurde. Wieder mit anderen Worten ausgedrückt wird bei dem zweiten Schritt ermittelt beziehungsweise erkannt, dass der Einlegevorgang im Hinblick auf das Einlegen des zweiten Gangs keinen Erfolg hatte. Dies bedeutet, dass im Rahmen der Erfindung unter dem Einlegevorgang an sich beziehungsweise unter dem Durchführen des Einlegevorgangs an sich nicht notwendigerweise zu verstehen ist, dass bereits das Durchführen des Einlegevorgangs an sich zum Einlegen des zweiten Gangs führt, sondern insbesondere ist im Rahmen der Erfindung unter dem Einlegevorgang beziehungsweise unter dem Durchführen des Einlegevorgangs an sich zu verstehen, dass versucht wird beziehungsweise ein Versuch unternommen wird, den zweiten Gang einzulegen. Das Einlegen des zweiten Gangs kann jedoch beispielsweise dadurch verhindert werden beziehungsweise unterbleiben, dass das zuvor beschriebene Ansteuern des Aktors nicht zu einer zum Einlegen des zweiten Gangs vorgesehenen beziehungsweise erforderlichen Bewegung des Gangstellers führt oder dass eine durch das Ansteuern des Aktors bewirkte Bewegung des Gangstellers zwar erfolgt, jedoch nicht zum tatsächlichen Einlegen des zweiten Gangs führt. Dies wird beispielsweise bei dem zweiten Schritt ermittelt, insbesondere erfasst oder erkannt. Beispielsweise wird bei dem zweiten Schritt derart ermittelt, dass trotz des Durchführens des Einlegevorgangs das Einlegen des zweiten Gangs unterbleibt, dass mittels wenigstens eines Positionssensors wenigstens eine Position des Gangstellers erfasst wird. Beispielsweise ist der zweite Gang dann eingelegt, wenn sich der Gangsteller in einer Einlegeposition befindet. Mit anderen Worten wird beispielsweise der zweite Gang dadurch eingelegt, dass der Gangsteller, insbesondere mittels des Aktors und insbesondere durch Ansteuern des Aktors, in die Einlegeposition zu bewegen ist beziehungsweise bewegt wird. Beispielsweise wird die mittels des Positionssensors erfasste Position des Gangstellers mit der Einlegeposition verglichen. Wird anhand des Vergleiches erkannt, dass die mittels des Positionssensors erfasste, aktuelle beziehungsweise tatsächliche Position des Gangstellers von der Einlegeposition abweicht, so kann darauf rückgeschlossen werden, dass trotz der Durchführung des Einlegevorgangs eine Bewegung des Gangstellers in die Einlegeposition und somit das Einlegen des zweiten Gangs nicht stattgefunden haben, das heißt unterblieben sind.

Bei einem dritten der Schritte des Verfahrens wird insbesondere in Abhängigkeit davon, dass bei dem zweiten Schritt ermittelt wird, dass trotz des Durchführens des Einlegevorgangs das Einlegen des zweiten Gangs unterbleibt, ein von dem ersten Gang und von dem zweiten Gang unterschiedlicher, dritter Gang des Doppelkupplungsgetriebe ausgewählt. Bei einem vierten der Schritte wird der ausgewählte dritte Gang eingelegt, sodass in dem Parksperrenzustand der erste Gang und der dritte Gang zumindest vorübergehend gleichzeitig eingelegt sind. Hierdurch ist das Doppelkupplungsgetriebe verspannt oder das Doppelkupplungsgetriebe kann hierdurch verspannt sein, wodurch die insbesondere mechanische Parksperre eingelegt beziehungsweise aktiviert ist. Vorzugsweise ist es vorgesehen, dass im Parksperrenzustand beide Kupplungen gleichzeitig geöffnet sind, insbesondere während der erste Gang und der dritte Gang gleichzeitig eingelegt sind. Vorzugsweist ist es vorgesehen, dass der zweite Gang und der auch als Alternativgang bezeichnete dritte Gang Gänge desselben Teilgetriebes sind.

Durch den Parksperrenzustand, in welchem beispielsweise der erste Gang und der dritte Gang gleichzeitig eingelegt sind, kann eine mechanische Parksperre realisiert werden, ohne dass hierzu eine zusätzliche, mechanische Parksperre erforderlich ist. Die Parksperre wird vorzugsweise in einem Stillstand des Kraftfahrzeugs eingelegt, um das Kraftfahrzeug insbesondere unabhängig von einer auch als Parkbremse bezeichneten Feststellung des Kraftfahrzeugs gegen ein Wegrollen zu sichern. Insbesondere dann, wenn das Kraftfahrzeug an einer Steigung beziehungsweise an einem Gefälle abgestellt und die Parksperre eingelegt wird, wird das Doppelkupplungsgetriebe durch das Eigengewicht des Kraftfahrzeugs und durch eine aus dem Eigengewicht des Kraftfahrzeugs resultierende und auf das Kraftfahrzeug insbesondere in Fahrzeuglängsrichtung wirkende Hangabtriebskraft verspannt. Insbesondere kann aus der Hangabtriebskraft ein Hangabtriebsdrehmoment resultieren, welches beispielsweise über eine Getriebeabtriebswelle des Doppelkupplungsgetriebes in das Doppelkupplungsgetriebe eingeleitet wird. Um beispielsweise die Parksperre zu deaktivieren beziehungsweise auszulegen, das heißt um den Parksperrenzustand zu beenden, wird beispielsweise einer der Gänge, die in dem Parksperrenzustand gleichzeitig eingelegt sind, ausgelegt, insbesondere während der jeweils andere der in dem Parksperrenzustand gleichzeitig eingelegten Gänge eingelegt bleibt.

Der zum Einlegen des zweiten Gangs vorgesehene Gangsteller ist beispielsweise ein Gangsteller zum formschlüssigen Einlegen des zweiten Gangs. Der Gangsteller ist beispielsweise, insbesondere relativ zu einem Gehäuse des Doppelkupplungsgetriebes, bewegbar, um dadurch beispielsweise ein, insbesondere formschlüssiges, Schaltelement zu bewegen. Beispielsweise ist das insbesondere separat von dem Gangsteller ausgebildete Schaltelement, insbesondere translatorisch, relativ zu dem Gehäuse bewegbar, um dadurch den zweiten Gang einzulegen. Das Schaltelement kann beispielsweise eine Schaltmuffe sein. Insbesondere ist es denkbar, dass das Schaltelement eine erste Verzahnung aufweist. Das Schaltelement ist beispielsweise drehfest mit einer Getriebewelle des einfach auch als Getriebe bezeichneten Doppelkupplungstriebes verbunden, wobei das Schaltelement, insbesondere translatorisch, relativ zu dem Gehäuse und relativ zu der Getriebewelle bewegbar ist.

Um den zweiten Gang tatsächlich einzulegen, wird beispielsweise der Gangsteller derart bewegt, dass das Schaltelement derart bewegt wird, dass die erste Verzahnung in Eingriff und somit in formschlüssiges Zusammenwirken mit einer korrespondierenden zweiten Verzahnung kommt, die beispielsweise an einem Zahnrad des zweiten Ganges vorgesehen ist. Ziel des Einlegevorgangs ist es grundsätzlich, das Zahnrad mittels der Verzahnungen und mittels des Schaltelements drehfest mit der Getriebewelle zu verbinden, da dann wenn der zweite Gang ausgelegt ist, dass Zahnrad relativ zu der Getriebewelle drehbar ist, mithin nicht drehfest mit der Getriebewelle verbunden sondern drehbar auf der Getriebewelle angeordnet ist.

Dabei kann ein beziehungsweise das Einlegen des zweiten Gangs durch eine sogenannte Zahn-auf-Zahn-Stellung verhindert werden. Unter der Zahn-auf-Zahn-Stellung kann insbesondere verstanden werden, dass zumindest ein erster Zahn der ersten Verzahnung in Bewegungsrichtung des Gangstellers durch wenigstens einen Zahn der zweiten Verzahnung überlappt oder überdeckt ist, wobei der Gangsteller in die Bewegungsrichtung zu bewegen ist beziehungsweise bewegt wird, um den zweiten Gang einzulegen. Dadurch, dass der Zahn der ersten Verzahnung in die Bewegungsrichtung durch den Zahn der zweiten Verzahnung überlappt oder überdeckt ist, befindet sich der Zahn der ersten Verzahnung entlang der Bewegungsrichtung in Stützanlage mit dem Zahn der zweiten Verzahnung oder aber der Zahn der ersten Verzahnung kommt entlang der Bewegungsrichtung in Stützanlage mit dem Zahn der zweiten Verzahnung, insbesondere dann, wenn der Gangsteller ein Stück bewegt und dabei in Richtung der Einlegeposition bewegt wird. Die Zahn-auf-Zahn-Stellung vermeidet jedoch eine vollständige Bewegung des Gangstellers in die Einlegeposition. Eine solche Zahn-auf-Zahn-Stellung ist statistisch eher unwahrscheinlich, jedoch ohne weiteres möglich. Mit anderen Worten kann das beziehungsweise ein Einlegen des zweiten Gangs aufgrund einer statistisch möglichen, geometrischen Lage des Gangstellers verhindert werden, wobei beispielsweise die zuvor genannte Zahn-auf-Zahn-Stellung eine solche statistisch mögliche, geometrische Lage des Gangstellers ist.

Der Einlegevorgang beziehungsweise das Erreichen der Einlegeposition muss beispielsweise nicht unbedingt durch eine Zahn-auf-Zahnstellung verhindert werden, sondern gegebenenfalls herrscht zwar keine Zahn-auf-Zahnstellung, jedoch kann gegebenenfalls kein ausreichendes Flankenspiel und somit kein ausreichender Verdrehweg, insbesondere des Zahnrads vorliegen, sodass der zweite Gang nicht eingelegt werden kann. Dies kann der Fall sein, da es üblicherweise das Ziel bei modernen Getrieben ist, übermäßiges Flankenspiel und dadurch übermäßige Geräusche wie beispielsweise Klappern zu vermeiden.

Das erfindungsgemäße Verfahren ermöglicht es nun, den Parksperrenzustand insbesondere auch dann herbeizuführen beziehungsweise die Parksperre insbesondere auch dann sicher einzulegen, wenn das Einlegen des zweiten Gangs insbesondere durch eine statistisch mögliche, geometrische Lage des Parkstellers nicht möglich ist und somit verhindert wird. In der Folge ermöglicht es das erfindungsgemäße Verfahren, das Kraftfahrzeug besonders vorteilhaft gegen ein unerwünschtes Wegrollen zu sichern, sodass ein besonders sicherer Betrieb darstellbar ist.

Insbesondere kann vorgesehen sein, dass nach dem Durchführen des Einlegevorgangs beziehungsweise nach Beenden des Einlegevorgangs der Gangsteller in eine Neutralposition bewegt und dabei beispielsweise in eine der Bewegungsrichtung entgegengesetzte weitere Bewegungsrichtung bewegt wird, woraufhin beispielsweise schließlich der dritte Gang eingelegt wird. Insgesamt ist erkennbar, dass das Einlegen der Parksperre, das heißt das Schalten des Doppelkupplungsgetriebes in den Parksperrenzustand, bei zumindest nahezu allen geometrischen Lagen des Gangstellers möglich ist. Dies kann beispielsweise ausgehend von herkömmlichen Getrieben ohne weitere Bauteilanpassungen erfolgen, da das erfindungsgemäße Verfahren beispielsweise durch ohnehin vorhandenen Komponenten und insbesondere über eine bereits bestehende Aktoransteuerung umgesetzt werden kann. Vorzugsweise ist das Doppelkupplungsgetriebe ein Automatikgetriebe, das heißt ein automatisiertes oder automatisches Doppelkupplungsgetriebe, sodass beispielsweise das Durchführen des Einlegevorgangs und das Einlegen des jeweiligen Gangs automatisch durchgeführt werden, insbesondere mittels einer elektronischen Recheneinrichtung. Somit ist es beispielsweise vorgesehen, dass mittels einer elektronischen Recheneinrichtung des Doppelkupplungsgetriebes, insbesondere des Kraftfahrzeugs, die Schritte durchgeführt werden und dabei insbesondere ermittelt wird, dass trotz des Durchführens des Einlegevorgangs das Einlegen des zweiten Gangs unterbleibt.

Der zuvor genannte erste Gang kann, muss aber nicht notwendigerweise ein Anfahrgang beziehungsweise der die größte Übersetzung aufweisende Vorwärtsgang des Doppelkupplungsgetriebes sein, und demzufolge muss auch der zuvor genannte, zweite beziehungsweise dritte Gang nicht notwendigerweise der Vorwärtsgang mit der zwei- beziehungsweise drittgrößten Übersetzung sein. Vielmehr können der erste, zweite und dritte Gang irgendwelche Gänge, insbesondere Vorwärtsgänge, des Doppelkupplungsgetriebes, insbesondere desselben Teilgetriebes, sein.

Es ist vorgesehen, dass nach dem Einlegen des dritten Gangs der dritte Gang ausgelegt und der zweite Gang eingelegt werden, insbesondere während der erste Gang eingelegt bleibt. Diesem Verfahren liegt die Erkenntnis zugrunde, dass beispielsweise durch das Einlegen des dritten Gangs beziehungsweise infolge des Einlegens des dritten Gangs eine solche Bewegung des dem zweiten Gang zugeordneten Gangstellers bewirkt wird, dass der Gangsteller beispielsweise aus der zuvor beschriebenen, das Einlegen des zweiten Gangs verhindernden Lage herausbewegt wird und in eine Lage kommt, in der der zweite Gang tatsächlich eingelegt werden kann. Wird dann der zweite Gang eingelegt, indem beispielsweise der Einlegevorgang erneut durchgeführt wird, so kann in der Folge die Parksperre besonders sicher eingelegt werden. Vorzugsweise ist es vorgesehen, dass beispielsweise zuerst der zweite Gang eingelegt und dann der dritte Gang ausgelegt wird oder aber umgekehrt. Vorzugsweise sind dann der erste Gang und der zweite Gang in dem Parksperrenzustand gleichzeitig eingelegt sind, insbesondere während alle anderen Gänge des Doppelkupplungsgetriebes ausgelegt sind oder während wenigstens oder genau ein Gang des anderen Teilgetriebes eingelegt ist.

Ferner ist es denkbar, dass, insbesondere nach dem Einlegen des dritten Gangs, der erste Gang ausgelegt und ein von dem ersten Gang, dem zweiten Gang und dem dritten Gang unterschiedlicher vierter Gang des Doppelkupplungsgetriebes eingelegt wird, sodass in dem Parksperrenzustand der dritte Gang und der vierte Gang gleichzeitig eingelegt sind. Dadurch kann beispielsweise das Kraftfahrzeug besonders sicher gegen ein unerwünschtes Wegrollen gesichert werden. Der dritte Gang und der vierte Gang sind vorzugsweise Gänge desselben Teilgetriebes. Insbesondere kann so vorgesehen sein, wahlweise beziehungsweise bedarfsgerecht das eine Teilgetriebe oder das andere Teilgetriebe zum Bewirken der Parksperre zu nutzen.

Um die Parksperre besonders sicher aktivieren beziehungsweise einlegen zu können, ist es bei einer Ausführungsform der Erfindung vorgesehen, dass der dritte Gang ein Gang des ersten Teilgetriebes ist. Somit sind in dem Parksperrenzustand der erste Gang und der dritte Gang des einen Teilgetriebes zumindest vorübergehend gleichzeitig eingelegt, sodass das eine Teilgetriebe auch als gesperrtes Teilgetriebe bezeichnet wird. Vorzugsweise sind der erste Gang und der dritte Gang in dem Parksperrenzustand zumindest vorübergehend gleichzeitig eingelegt, während vorzugsweise alle Gänge des jeweils anderen Teilgetriebes ausgelegt sind, oder während im anderen Teilgetriebe wenigstens oder genau ein Gang eingelegt ist. Somit ist das andere Teilgetriebe beispielsweise ein sogenanntes nicht-gesperrtes Teilgetriebe.

Als weiterhin vorteilhaft hat es sich gezeigt, wenn der dritte Gang ein Gang des zweiten Teilgetriebes ist. Auch hierdurch kann der Parksperrenzustand besonders sicher aktiviert werden.

Eine weitere Ausführungsform zeichnet sich dadurch aus, dass in dem Parksperrenzustand der erste Gang eingelegt ist, indem ein als Losrad ausgebildetes und auf einer ersten Welle des Doppelkupplungsgetriebes drehbar angeordnetes erstes Zahnrad des ersten Gangs mittels eines dem ersten Gang zugeordneten, auf der ersten Welle angeordneten und drehfest mit der ersten Welle verbundenen ersten Schaltelements drehfest mit der ersten Welle verbunden ist. Dabei wird der dritte Gang beispielsweise derart eingelegt, dass ein als Losrad ausgebildetes und auf einer zweiten Welle des Doppelkupplungsgetriebes drehbar angeordnetes zweites Zahnrad des dritten Gangs mittels eines dem dritten Gang zugeordneten, auf der zweiten Welle angeordneten und drehfest mit der zweiten Welle verbundenen zweiten Schaltelements drehfest mit der zweiten Welle verbunden wird. Dadurch kann die Parksperre besonders vorteilhaft gewährleistet beziehungsweise eingelegt werden, wenn der zweite Gang nicht eingelegt werden kann.

Um die Parksperre besonders sicher einlegen und somit das Kraftfahrzeug besonders sicher gegen ein unerwünschtes Wegrollen sichern zu können, ist es in weiterer Ausgestaltung der Erfindung vorgesehen, dass das jeweilige Schaltelement ein formschlüssiges Schaltelement, insbesondere eine Klauenkupplung, ist.

Als weiterhin besonders vorteilhaft hat es sich gezeigt, wenn in dem Parksperrenzustand wenigstens oder genau eine der Kupplungen oder beide Kupplungen gleichzeitig geschlossen sind. Vorzugsweise ist eine der Kupplungen geschlossen, während die andere Kupplung geöffnet ist. Dadurch kann die Parksperre sicher eingelegt gehalten werden.

Eine weitere Ausführungsform zeichnet sich dadurch aus, dass das Verfahren bei einem Stillstand des Kraftfahrzeugs durchgeführt wird.

Ein zweiter Aspekt der Erfindung betrifft ein vorzugsweise als Kraftwagen, insbesondere als Personenkraftwagen, ausgebildetes Kraftfahrzeug, welches zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Die Erfindung umfasst auch die Kombinationen der Merkmale der beschriebenen Ausführungsformen.

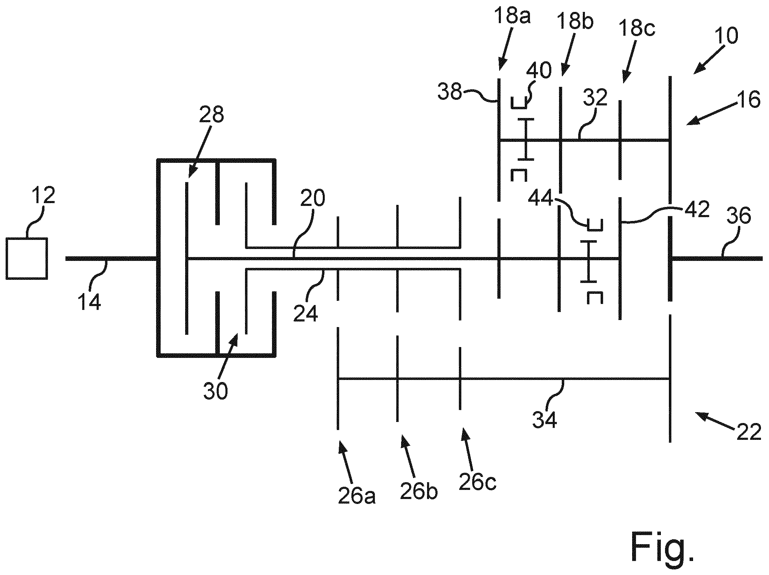

Im Folgenden ist ein Ausführungsbeispiel der Erfindung beschrieben. Hierzu zeigt die einzige Fig. eine schematische Darstellung eines Doppelkupplungsgetriebes eines Kraftfahrzeugs, wobei das Doppelkupplungsgetriebe gemäß einem erfindungsgemäßen Verfahren betrieben wird.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsform umfassen. Des Weiteren ist die beschriebene Ausführungsform auch durch weitere der bereits beschriebenen Merkmale der Erfindung ergänzbar.

Die einzige Fig. zeigt in einer schematischen Darstellung ein Doppelkupplungsgetriebe 10 eines Kraftfahrzeugs, welches vorzugsweise als Kraftwagen oder vorzugsweise als Personenkraftwagen ausgebildet ist. Das Kraftfahrzeug weist wenigstens einen Antriebsmotor auf, mittels welchem wenigstens zwei Räder des Kraftfahrzeugs über das Doppelkupplungsgetriebe 10 angetrieben werden können. Durch Antreiben der Räder ist beziehungsweise wird das Kraftfahrzeug insgesamt antreibbar beziehungsweise angetrieben. Die Räder sind Bodenkontaktelemente, über die das Kraftfahrzeug in Fahrzeughochrichtung nach unten hin an einem Boden abstützbar oder abgestützt ist. Die auch als Fahrzeugräder bezeichneten Räder rollen an dem Boden ab, wenn das Kraftfahrzeug entlang des Bodens gefahren wird, während das Kraftfahrzeug in Fahrzeughochrichtung nach unten hin an dem Boden über die Räder abgestützt ist. Der Antriebsmotor ist in der Fig. besonders schematisch dargestellt und dort mit 12 bezeichnet. Bei dem Antriebsmotor 12 kann es sich um eine beispielsweise als Hubkolbenmaschine ausgebildete Verbrennungskraftmaschine oder aber um eine elektrische Maschine handeln. Der Antriebsmotor 12 weist eine beispielsweise als Kurbelwelle ausgebildete Abtriebswelle 14 auf.

Das Doppelkupplungsgetriebe 10 weist ein erstes Teilgetriebe 16 auf, welches beispielsweise drei erste Gänge 18a-c umfasst. Außerdem weist das erste Teilgetriebe 16 eine erste Getriebeeingangswelle 20 auf. Das Doppelkupplungsgetriebe 10 umfasst darüber hinaus ein zweites Teilgetriebe 22, welches eine zweite Getriebeeingangswelle 24 und zweite Gänge 26a-c aufweist. Die Gänge 18a-c sind beispielsweise ungerade Gänge oder werden auch als ungerade Gänge bezeichnet, wobei beispielsweise der Gang 18a der sogenannte erste Gang, der Gang 18b der sogenannte dritte Gang und der Gang 18c der sogenannte fünfte Gang des Doppelkupplungsgetriebes 10 sein kann. Die Gänge 26a-c werden beispielsweise auch als gerade Gänge bezeichnet oder sind sogenannte gerade Gänge des Doppelkupplungsgetriebes 10, wobei beispielsweise der Gang 26a der zweite Gang, der Gang 26b der vierte Gang und der Gang 26c der sechste Gang des Doppelkupplungsgetriebes 10 sein kann. Die Gänge 18a-c und 26a-c können auch als Vorwärtsgänge bezeichnete Vorwärtsfahrgänge zum Bewirken einer jeweiligen Vorwärtsfahrt des Kraftfahrzeugs ausgebildet sein, oder aber wenigstens oder genau einer der Gänge 18a-c und 26a-c ist ein Rückwärtsgang zum Bewirken einer Rückwärtsfahrt des Kraftfahrzeugs. Der erste Gang ist ein Vorwärtsanfahrgang, mittels welchem das Kraftfahrzeug vorwärts angefahren werden kann. Der Rückwärtsgang ist ein Rückwärtsanfahrgang, mittels welchem das Kraftfahrzeug rückwärts angefahren werden kann.

Das Doppelkupplungsgetriebe 10 weist dabei eine dem Teilgetriebe 16 zugeordnete erste Kupplung 28 auf, welche beispielsweise bezogen auf die Teilgetriebe 16 und 22, insbesondere bezogen auf die Getriebeeingangswellen 20 und 24, ausschließlich dem Teilgetriebe 16 beziehungsweise ausschließlich der Getriebeeingangswelle 20, nicht jedoch dem Teilgetriebe 22 und nicht der Getriebeeingangswelle 24 zugeordnet ist. Das Doppelkupplungsgetriebe 10 umfasst darüber hinaus eine dem Teilgetriebe 22 zugeordnete zweite Kupplung 30, welche beispielsweise bezogen auf die Teilgetriebe 16 und 20, insbesondere bezogen auf die Getriebeeingangswellen 20 und 24, ausschließlich dem Teilgetriebe 22 beziehungsweise ausschließlich der Getriebeeingangswelle 24, nicht jedoch dem Teilgetriebe 16 beziehungsweise nicht jedoch der Getriebeeingangswelle 20 zugeordnet ist. Dies bedeutet, dass mittels der Kupplung 28 bezogen auf die Getriebeeingangswellen 20 und 24 ausschließlich die Getriebeeingangswelle 20 drehmomentübertragend mit der Abtriebswelle 14 verbindbar ist. Mittels der Kupplung 30 ist bezogen auf die Getriebeeingangswellen 20 und 24 ausschließlich die Getriebeeingangswelle 24 mit der Abtriebswelle 14 drehmomentübertragend verbindbar beziehungsweise koppelbar. Außerdem ist die Getriebeeingangswelle 24 als eine Hohlwelle ausgebildet, welche vorliegend zumindest teilweise, insbesondere zumindest überwiegend oder vollständig, durch die beispielsweise als Massivwelle ausgebildete Getriebeeingangswelle 20 durchdrungen ist. Das jeweilige Teilgetriebe 16 beziehungsweise 22 weist auch eine Seitenwelle 32 beziehungsweise 34 auf. Das Doppelkupplungsgetriebe 10 weist eine den Teilgetrieben 16 und 20, insbesondere den Seitenwellen 32 und 34, gemeinsame Getriebeausgangswelle 36 auf, welche von den Seitenwellen 32 und 34 antreibbar ist.

Der Antriebsmotor 12 kann über seine Abtriebswelle 14 wenigstens ein Antriebsdrehmoment bereitstellen, welches über die jeweilige Kupplung 28 beziehungsweise 30 in das Teilgetriebe 16 beziehungsweise 22 eingeleitet und darüber auf die Getriebeausgangswelle 36 übertragen werden kann. Auf diese Weise sind über das Doppelkupplungsgetriebe 10 die zuvor genannten Räder von dem Antriebsmotor 12 antreibbar. Vorzugsweise ist es vorgesehen, dass die Kupplung 30, wenn die Kupplung 28 geschlossen ist, geöffnet ist. Außerdem ist beispielsweise vorgesehen, dass die Kupplung 28 dann, wenn die Kupplung 30 geschlossen ist, geöffnet ist. Somit ist vorzugsweise stets nur eines der Teilgetriebe 16 und 20 über die jeweilige Kupplung 28 beziehungsweise 30 drehmomentübertragend mit der Abtriebswelle 14 verbunden.

Im Folgenden wird ein Verfahren zum Betreiben des Doppelkupplungsgetriebes 10 beschrieben. Bei dem Verfahren wird das Doppelkupplungsgetriebe 10 in einen Parksperrenzustand geschaltet, sodass sich bei dem Verfahren das Doppelkupplungsgetriebe 10 zumindest vorübergehend in dem Parksperrenzustand befindet.

Um den Parksperrenzustand und somit eine mechanische Parksperre besonders sicher einlegen zu können, mittels welcher beispielsweise die zuvor genannten Räder an einer Drehung gesichert und dadurch das Kraftfahrzeug gegen ein unerwünschtes Wegrollen gesichert werden kann, wird das Doppelkupplungsgetriebe 10 in den Parksperrenzustand durch die folgenden Schritte geschaltet. Bei einem ersten der Schritte wird, während beispielsweise der Gang 18a des Teilgetriebes 16 eingelegt ist, ein zum Einlegen beispielsweise des Gangs 18b vorgesehener Einlegevorgang durchgeführt. Bei einem zweiten der Schritte der ermittelt, dass trotz des Durchführens des Einlegevorgangs das Einlegen des zweiten Gangs 18b unterbleibt beziehungsweise nicht erfolgt. Bei einem dritten der Schritte wird beispielsweise der Gang 18c ausgewählt, und bei einem vierten der Schritte wird der ausgewählte Gang 18c eingelegt, sodass in dem Parksperrenzustand der Gang 18a und der Gang 18c zumindest vorübergehend gleichzeitig eingelegt sind. Dabei ist erkennbar, dass die in dem Parksperrenzustand zumindest vorübergehend gleichzeitig eingelegten Gänge 18a und 18c Gänge desselben Teilgetriebes 16 sind.

In dem Parksperrenzustand ist der Gang 18a vorzugsweise eingelegt, indem ein als Losrad ausgebildetes und auf der Seitenwelle 32 des Doppelkupplungsgetriebes 10, insbesondere des Teilgetriebes 16, drehbar angeordnetes erstes Zahnrad 38 des Gangs 18a mittels eines dem ersten Gang 18a zugeordneten, auf der Seitenwelle 32 angeordneten und drehfest mit der Seitenwelle 32 verbundenen ersten Schaltelements 40 drehfest mit der Seitenwelle 32 verbunden ist. Das Schaltelement 40 ist dabei eine Schaltmuffe. Der Gang 18c wird vorzugsweise eingelegt, indem ein als Losrad ausgebildetes und auf der Getriebeeingangswelle 20 des Doppelkupplungsgetriebes 10, insbesondere des Teilgetriebes 16, drehbar angeordnetes zweites Zahnrad 42 des Gangs 18c mittels eines dem Gang 18c zugeordneten, auf der Getriebeeingangswelle 20 angeordneten und drehfest mit der Getriebeeingangswelle 20 verbundenen zweiten Schaltelements 44 drehfest mit der Getriebeeingangswelle 20 verbunden wird. Dabei ist das Schaltelement 44 vorzugsweise eine zweite Schaltmuffe. Die Schaltelemente 40 und 44 sind Gangsteller, insbesondere formschlüssige Gangsteller, welche zum Einlegen der Gänge 18a und 18c in eine jeweilige Einlegeposition bewegt werden. Hierdurch wird das Schaltelement 40 formschlüssig mit dem Zahnrad 38 und das Schaltelement 44 formschlüssig mit dem Zahnrad 42 verbunden, sodass das Zahnrad 38 über das Schaltelement 40 mit der Seitenwelle 32 und das Zahnrad 42 über das Schaltelement 44 formschlüssig mit der Getriebeeingangswelle 20 verbunden wird. Die Seitenwelle 32 und die Getriebeeingangswelle 20 sind jeweilige, voneinander unterschiedliche und separat voneinander ausgebildete Wellen des Doppelkupplungsgetriebes 10, insbesondere des Teilgetriebes 16, wobei die Wellen desachsiert zueinander angeordnet sind und zumindest im Wesentlichen parallel zueinander verlaufen. Außerdem ist das jeweilige Schaltelement 40 beziehungsweise 44 ein formschlüssiges Schaltelement, insbesondere eine Klauenkupplung, mittels welchem beziehungsweise welcher das jeweilige Zahnrad 38 beziehungsweise 42 formschlüssig drehfest mit der Seitenwelle 32 beziehungsweise mit der Getriebeeingangswelle 20 verbindbar beziehungsweise verbunden ist.

Grundsätzlich ist es denkbar, dass nach dem Einlegen des Gangs 18c der Gang 18c ausgelegt und beispielsweise der Gang 18b eingelegt wird, insbesondere während der Gang 18a eingelegt bleibt, sodass in dem Parksperrenzustand zumindest vorübergehend die Gängen 18a und 18b gleichzeitig eingelegt sind. Ferner ist es denkbar, dass, insbesondere nach dem Einlegen des Gangs 18c, der erste Gang 18a ausgelegt und ein von dem Gang 18a, dem Gang 18b und dem Gang 18c unterschiedlicher vierter Gang des Doppelkupplungsgetriebes 10 eingelegt wird, sodass in dem Parksperrenzustand beispielsweise der Gang 18c oder der Gang 18b und der vierte Gang zumindest vorübergehend gleichzeitig eingelegt sind. Der vierte Gang ist beispielsweise einer der Gänge 26a-c und somit ein Gang des Teilgetriebes 22 oder aber ein Gang des Teilgetriebes 16.

Insgesamt ist erkennbar, dass der Parksperrenzustand auch dann sicher aktiviert werden kann, wenn ein Einlegen des eigentlich als Sperrgang vorgesehenen Gangs 18b beispielsweise durch ein unvorhergesehenes Ereignis wie beispielsweise eine ungünstige Lage oder Position eines dem Gang 18b zugeordneten Gangstellers nicht möglich ist. Dann wird anstelle des eigentlich vorgesehenen Sperrgangs beispielsweise zumindest vorübergehend der Gang 18c eingelegt, um das Doppelkupplungsgetriebe 10, insbesondere das Teilgetriebe 16, zu verspannen. Durch dieses Verspannen ist eine mechanische Parksperre aktiviert beziehungsweise eingelegt, wodurch das Kraftfahrzeug gegen unerwünschtes Wegerollen gesichert werden kann.

## Patentansprüche

1. Verfahren zum Betreiben eines ein erstes Teilgetriebe (16), ein zweites Teilgetriebe (22), eine dem ersten Teilgetriebe (16) zugeordnete erste Kupplung (28) und eine dem zweiten Teilgetriebe (22) zugeordnete zweite Kupplung (30) aufweisenden Doppelkupplungsgetriebes (10) eines Kraftfahrzeugs, bei welchem das Doppelkupplungsgetriebe (10) in einen Parksperrenzustand geschaltet wird,
**dadurch gekennzeichnet, dass**
das Doppelkupplungsgetriebe (10) in den Parksperrenzustand durch die folgenden Schritte geschaltet wird:
- während ein erster Gang (18a) eines der Teilgetriebe (16, 20) eingelegt ist: Durchführen eines zum Einlegen eines zweiten Gangs (18b) des einen Teilgetriebes (16) vorgesehenen Einlegevorgangs;
- Ermitteln, dass trotz des Durchführens des Einlegevorgangs das Einlegen des zweiten Gangs (18b) unterbleibt;
- Auswählen eines von dem ersten Gang (18a) und von dem zweiten Gang (18b) unterschiedlichen, dritten Gangs (18c) des Doppelkupplungsgetriebes (10); und
- Einlegen des ausgewählten dritten Gangs (18c), sodass in dem Parksperrenzustand der erste Gang (18a) und der dritte Gang (18c) vorübergehend gleichzeitig eingelegt sind, wobei:
∘ nach dem Einlegen des dritten Gangs (18c) der dritte Gang (18c) ausgelegt und der zweite Gang (18b) eingelegt wird, während der erste Gang (18a) eingelegt bleibt oder
∘ nach dem Einlegen des dritten Gangs (18c) der erste Gang (18a) ausgelegt und ein von dem ersten Gang (18a), dem zweiten Gang (18b) und dem dritten Gang (18c) unterschiedlicher vierter Gang (26a-c) des Doppelkupplungsgetriebes (10) eingelegt wird, sodass in dem Parksperrenzustand der dritte Gang (18c) und der vierte Gang (26a-c) gleichzeitig eingelegt sind.

2. Verfahren nach Anspruch 1,
**dadurch gekennzeichnet, dass**
der dritte Gang (18c) ein Gang des ersten Teilgetriebes (16) ist.

3. Verfahren nach Anspruch 1,
**dadurch gekennzeichnet, dass**
der dritte Gang (18c) ein Gang des zweiten Teilgetriebes (20) ist.

4. Verfahren nach einem der vorhergehenden Ansprüche,
**dadurch gekennzeichnet, dass**
in dem Parksperrenzustand der erste Gang (18a) eingelegt ist, indem ein als Losrad ausgebildetes und auf einer ersten Welle (32) des Doppelkupplungsgetriebes (10) drehbar angeordnetes erstes Zahnrad (38) des ersten Gangs (18a) mittels eines dem ersten Gang (18a) zugeordneten, auf der ersten Welle (32) angeordneten und drehfest mit der ersten Welle (32) verbundenen ersten Schaltelements (40) drehfest mit der ersten Welle (32) verbunden ist, wobei der dritte Gang (18c) eingelegt wird, indem ein als Losrad ausgebildetes und auf einer zweiten Welle (20) des Doppelkupplungsgetriebes (10) drehbar angeordnetes zweites Zahnrad (42) des dritten Gangs (18c) mittels eines dem dritten Gang (18c) zugeordneten, auf der zweiten Welle (20) angeordneten und drehfest mit der zweiten Welle (20) verbundenen zweiten Schaltelements (44) drehfest mit der zweiten Welle (20) verbunden wird.

5. Verfahren nach Anspruch 4,
**dadurch gekennzeichnet, dass**
das jeweilige Schaltelement (40, 44) ein formschlüssiges Schaltelement ist.

6. Verfahren nach einem der vorhergehenden Ansprüche,
**dadurch gekennzeichnet, dass**
in dem Parksperrenzustand wenigstens oder genau eine der Kupplungen (28, 30) oder beide Kupplungen (28, 30) gleichzeitig geschlossen sind.

7. Verfahren nach einem der vorhergehenden Ansprüche,
**dadurch gekennzeichnet, dass**
das Verfahren bei einem Stillstand des Kraftfahrzeugs durchgeführt wird.

8. Kraftfahrzeug, mit einem Doppelkupplungsgetriebe (10), welches zum Durchführen eines Verfahrens nach einem der vorhergehenden Ansprüche ausgebildet ist.

## Claims

1. Method for operating a dual clutch transmission (10) of a motor vehicle, having first sub-transmission (16), a second sub-transmission (22), a first clutch (28) assigned to the first sub-transmission (16), and a second clutch (30) assigned to the second sub-transmission (22), wherein the dual clutch transmission (10) is shifted to a parking lock state,
**characterized in that**
the dual clutch transmission (10) is shifted to the parking lock state by the following steps:
- while a first gear (18a) of one of the sub-transmissions (16, 20) is engaged: carrying out an engagement procedure provided for engaging a second gear (18b) of the one sub-transmission (16);
- determining that the engagement of the second gear (18b) does not happen, despite carrying out the engagement procedure;
- selecting a third gear (18c) of the dual clutch transmission (10), different from the first gear (18a) and from the second gear (18b); and
- engaging the selected third gear (18c) such that, in the parking lock state, the first gear (18a) and the third gear (18c) are temporarily engaged simultaneously, wherein:
∘ after the third gear (18c) has been engaged, the third gear (18c) is disengaged and the second gear (18b) is engaged, while the first gear (18a) remains engaged, or
∘ after the third gear (18c) has been engaged, the first gear (18a) is disengaged and a fourth gear (26a-c) of the dual clutch transmission (10), different from the first gear (18a), the second gear (18b) and the third gear (18c), is engaged such that, in the parking lock state, the third gear (18c) and the fourth gear (26a-c) are engaged simultaneously.

2. Method according to Claim 1,
**characterized in that**
the third gear (18c) is a gear of the first sub-transmission (16).

3. Method according to Claim 1,
**characterized in that**
the third gear (18c) is a gear of the second sub-transmission (20).

4. Method according to one of the preceding claims,
**characterized in that**
in the parking lock state, the first gear (18a) is engaged **in that** a first gearwheel (38) of the first gear (18a), which is designed as an idler gearwheel and is rotatably disposed on a first shaft (32) of the dual clutch transmission (10), is co-rotationally connected to the first shaft (32) by means of a first shifting element (40) which is assigned to the first gear (18a), is disposed on the first shaft (32) and co-rotationally connected to the first shaft (32), wherein the third gear (18c) is engaged in that a second gearwheel (42) of the third gear (18c), which is designed as an idler gearwheel and is rotatably disposed on a second shaft (20) of the dual clutch transmission (10), is co-rotationally connected to the second shaft (20) by means of a second shifting element (44) which is assigned to the third gear (18c), is disposed on the second shaft (20) and co-rotationally connected to the second shaft (20).

5. Method according to Claim 4,
**characterized in that**
the respective shifting element (40, 44) is a form-fitting shifting element.

6. Method according to one of the preceding claims,
**characterized in that**
in the parking lock state, at least or exactly one of the clutches (28, 30) is closed, or both clutches (28, 30) are closed simultaneously.

7. Method according to one of the preceding claims,
**characterized in that**
the method is carried out when the motor vehicle is stationary.

8. Motor vehicle having a dual clutch transmission (10) which is designed to carry out a method according to one of the preceding claims.

## Revendications

1. Procédé de fonctionnement d'une transmission à double embrayage (10) d'un véhicule automobile, présentant une première transmission partielle (16), une deuxième transmission partielle (22), un premier embrayage (28) associé à la première transmission partielle (16) et un deuxième embrayage (30) associé à la deuxième transmission partielle (22), dans lequel la transmission à double embrayage (10) est commutée dans un état verrouillé de stationnement,
**caractérisé en ce que**
la transmission à double embrayage (10) est commutée dans l'état verrouillé de stationnement par les étapes suivantes :
- pendant qu'un premier rapport (18a) de l'une des transmissions partielles (16, 20) est engagé : exécuter une opération d'engagement prévue pour engager un deuxième rapport (18b) de ladite une des transmissions partielles (16) ;
- déterminer que, malgré l'exécution de l'opération d'engagement, le deuxième rapport (18b) n'est pas engagé ;
- sélectionner un troisième rapport (18c), différent du premier rapport (18a) et du deuxième rapport (18b), de la transmission à double embrayage (10) ; et
- engager le troisième rapport sélectionné (18c) de sorte que, dans l'état de verrouillage de stationnement, le premier rapport (18a) et le troisième rapport (18c) soient temporairement engagés simultanément, dans lequel :
∘ après l'engagement du troisième rapport (18c), le troisième rapport (18c) est désengagé et le deuxième rapport (18b) est engagé, tandis que le premier rapport (18a) reste engagé, ou
∘ après l'engagement du troisième rapport (18c), le premier rapport (18a) est engagé et un quatrième rapport (26a-c) de la transmission à double embrayage (10), différent du premier rapport (18a), du deuxième rapport (18b) et du troisième rapport (18c), est engagé, de sorte que, dans l'état verrouillé de stationnement, le troisième rapport (18c) et le quatrième rapport (26a-c) soient engagés simultanément.

2. Procédé selon la revendication 1,
**caractérisé en ce que**
le troisième rapport (18c) est un rapport de la première transmission partielle (16).

3. Procédé selon la revendication 1,
**caractérisé en ce que**
le troisième rapport (18c) est un rapport de la deuxième transmission partielle (20).

4. Procédé selon l'une des revendications précédentes,
**caractérisé en ce que**
dans l'état verrouillé de stationnement, le premier rapport (18a) est engagé en reliant solidairement en rotation au premier arbre (32) un premier pignon (38) du premier rapport (18a), réalisé sous forme de pignon fou et monté rotatif sur un premier arbre (32) de la transmission à double embrayage (10), au moyen d'un premier élément de commutation (40) associé au premier rapport (18a), monté sur le premier arbre (32) et solidaire en rotation du premier arbre (32), le troisième rapport (18c) étant engagé en reliant en rotation un deuxième pignon (42) du troisième rapport (18c), réalisé sous forme de pignon fou et monté rotatif sur un deuxième arbre (20) de la transmission à double embrayage (10), au deuxième arbre (20) au moyen d'un deuxième élément de commutation (44) associé au troisième rapport (18c), monté sur le deuxième arbre (20) et relié en rotation au deuxième arbre (20).

5. Procédé selon la revendication 4,
**caractérisé en ce que**
l'élément de commutation (40, 44) respectif est un élément de commutation à engagement positif.

6. Procédé selon l'une des revendications précédentes,
**caractérisé en ce que**
dans l'état verrouillé de stationnement, au moins un embrayage, ou exactement un, des embrayages (28, 30), ou les deux embrayages (28, 30), sont fermés simultanément.

7. Procédé selon l'une des revendications précédentes,
**caractérisé en ce que**
le procédé est mis en œuvre lorsque le véhicule automobile est à l'arrêt.

8. Véhicule automobile comprenant une transmission à double embrayage (10) agencée pour mettre en œuvre un procédé selon l'une des revendications précédentes.
